# EUROPEAN PATENT SPECIFICATION

(11) **EP 3 793 046 B1**
(45) Date of publication and mention of the grant of the patent: **07.08.2024**
(21) Application number: 19800465.7
(22) Date of filing: 12.02.2019
(51) Int. Cl.: H02G 5/00, H02B 1/20, H01R 4/38, H01R 4/58

(54) **CONTROL CENTER COMPRISING A BUSBAR CONNECTION DEVICE**
STEUERZENTRUM MIT EINER STROMSCHIENEVERBINDUNGSVORRICHTUNG
CENTRE DE COMMANDE COMPRENANT UN DISPOSITIF DE CONNEXION DE JEUX DE BARRES

(30) Priority: 10.05.2018 JP 2018091234
(43) Date of publication of application: 17.03.2021
(73) Proprietor: Mitsubishi Electric Corporation, Tokyo 100-8310 (JP)
(72) Inventor: SHIMADA, Goshi, Tokyo 100-8310 (JP); ONISHI, Kenji, Tokyo 100-8310 (JP); SEKI, Koichiro, Tokyo 100-8310 (JP); HANADA, Masaki, Tokyo 100-8310 (JP)
(74) Representative: Witte, Weller & Partner Patentanwälte mbB
(86) International application number: PCT/JP2019/004777
(87) International publication number: WO 2019/215974

(56) References cited:
- CN-U- 202 405 631
- CN-U- 202 405 631
- CN-U- 203 134 989
- JP-A- 2017 107 744
- JP-U- H0 447 307
- JP-U- S 532 680
- JP-U- S 532 680
- JP-Y2- H 055 765
- US-A1- 2007 207 638
- US-B2- 8 717 741

## Description

### TECHNICAL FIELD

The present invention relates to a control center comprising a busbar connection device which performs centralized control for controlling, protecting, measuring, and monitoring motors used for the operation of pumps, machinery, and the like at a factory, water and sewerage, a power station, and the like.

### BACKGROUND ART

A control center contains a plurality of functional units in which devices for controlling, protecting, measuring, and monitoring motors are unitized. Power feeding to each of the functional units is performed by connecting a contact provided in each functional unit to a vertical busbar via a horizontal busbar through which electric power is supplied from a host power supply and the vertical busbar through which the electric power is supplied to each functional unit.

The control centers of such a configuration are generally used such that a plurality of housings are made adjacent to each other. Since the adjacent control centers need to be electrically connected, the respective horizontal busbars in the respective housings are connected via a connection conductor which is for connecting between the busbars in a straddled manner. Connection work of the horizontal busbars needs to be performed in a limited space in the housings and accordingly, in a method using commonly used bolts and nuts, workability deteriorates, for instance, work on the backside of the busbar is required.

In order to solve the foregoing problem, it is proposed to be connected and held by the horizontal busbars to be placed in the housings of the adjacent control centers and a busbar connection device using a holder in which the connection conductor is coupled by nuts (for example, see Patent Document 1).

Patent Document 2, according to its abstract, states that, to provide a switchgear capable of downsizing the device and improving heat radiation performance, the switchgear comprises: a first conductor for non-plating treatment; a second conductor for non-plating treatment; a third conductor plated to connect the first conductor and the second conductor; an insertion hole for fastening bolts respectively formed at a connection portion between the first conductor and the third conductor and a connection portion between the second conductor and the third conductor; and a fastening nut in which a concave engaging portion formed in the insertion hole portion of the third conductor and a convex engaging portion engaging with the concave engaging portion is formed on a surface contacting with the third conductor are formed, the convex engaging portion is engaged with the concave engaging portion of the third conductor with rotation restrained, and the fastening nut to be engaged with the fastening bolt.

Patent Document 3, according to its abstract, relates to a power supply and distribution apparatus, concretely to a bus joint connecting device used in power transmission whole equipment. The device comprises a bus and a connection board located on the bus; left and right ends of the bus are respectively provided with a longitudinal U-shaped plug slot; one end of the connection board is also provided with a longitudinal U-shaped plug slot and the other end is provided with a bolt hole; a back side of the bus is provided with a thread connection block; a bolt can traverse the bolt hole in the connection board and the U-shaped plug slot on the bus to be connected and cooperated with the thread connecting block and to connect the connecting board with the bus. The above structure makes processing easy, reduces joint stress, makes bus connection more convenient, possesses certain adjustable functions and reduces on-site installation difficulty; the connection board is provided with a spacer pin which has functions of bus positioning and anti-rotating; meanwhile in an installation and using process of the structure, demolishment of any segment of a bus in the complete equipment can not affect an adjacent bus.

Patent Document 4 relates to a connection device in which the busbars are connected via two plate connectors with oblong holes which are clamped by bolts.

Patent Document 5, according to its abstract, states that busbar connection system for coupling a first busbar segment to a second busbar segment includes a mounting component defining a slot and configured to be coupled to the first busbar segment, a retaining component configured to be coupled to the second busbar segment, and a connecting member including a first end and an opposing second end. The first end is configured to be coupled to the mounting component and the second end is configured to be coupled to the retaining component. The busbar connection system also includes a pivot member configured to be operatively coupled to the first end and shaped to be received within the slot. The pivot member enables the connecting member to pivot about the mounting component.

Patent document 6 discloses a connection device for connecting busbars of strip-shaped busbars used in distribution boards or switchboards.

### RELATED ART DOCUMENT

### PATENT DOCUMENT

Patent Document 1: JP-U H7(1995)-23907
Patent Document 2: JP 2017 107744 A
Patent Document 3: CN 202 405 631 U
Patent Document 4: JP H04 47307 U
Patent Document 5: US 8 717 741 B2
Patent Document 6 : JP S 532680 U

### SUMMARY OF THE INVENTION

### PROBLEMS TO BE SOLVED BY THE INVENTION

However, when deviation in vertical direction and tilt occurs due to concavity and convexity and/or tilt of an installation surface in the busbar connection work of the control center, the busbar connection device using the holder of Patent Document 1 can perform position adjustment in horizontal direction during connection, but there is no room and it is difficult to perform position adjustment in vertical direction and tilt; and accordingly, when position adjustment other than the horizontal direction is required, position adjustment needs to be performed using a method other than that and workability deteriorates. Furthermore, it is structured such that the front and back of the busbars are sandwiched by the holder and accordingly a holder having a different shape needs to be prepared for each thickness of the busbar. Additionally, the holder has a complicated shape using bends heavily and accordingly a problem exists in that accuracy deteriorates and manufacturing costs increase.

The present invention has been made to solve the foregoing problem and an object of the present invention is to provide a control center, comprising a busbar connection device which can perform position adjustment not only in horizontal direction but also in vertical direction and tilt, can suppress costs by a simple structure, and can deal with the thicknesses of various busbars by the same shape.

### MEANS FOR SOLVING THE PROBLEMS

According to the present invention, there is provided a control center according to independent claim 1.

### ADVANTAGEOUS EFFECT OF THE INVENTION

According to the present invention, drop prevention of the nut member and fixing of the nut during fastening of the bolt become unnecessary by fixing the plate nut to the horizontal busbar. Furthermore, the position of the plate nut can be adjusted not only in horizontal direction but also in vertical direction and tilt by adjusting a fixing portion of the plate nut. Further, since the plate nut is fixed on one side surface of the horizontal busbar, there is no need to provide such a structure that sandwiches the conductor, it becomes a simple shape that is not influenced by the thickness of the conductor, and it can deal with connection of the horizontal busbars of various thicknesses by one type of the plate nut.

### BRIEF DESCRIPTION OF THE DRAWINGS

FIG. 1 is a perspective view showing a busbar structure and a busbar connection device of a control center of Embodiment 1 of the present invention;
FIG. 2 is a perspective view showing connection of the busbar connection device and horizontal busbars of Embodiment 1 of the present invention;
FIG. 3 is a perspective view showing the busbar connection device of Embodiment 1 of the present invention;
FIG. 4 is a front view showing the busbar connection device of Embodiment 1 of the present invention;
FIG. 5 is a sectional view taken along the line A-A of FIG. 4;
FIG. 6 is a perspective view showing the structure of a plate nut of Embodiment 1 of the present invention;
FIG. 7 is a front view showing the operation of the busbar connection device of Embodiment 1 of the present invention;
FIG. 8 is a front view showing the operation of the busbar connection device of Embodiment 1 of the present invention;
FIG. 9 is a sectional view taken along the line B-B of FIG. 8;
FIG. 10 is a perspective view showing a busbar connection device of Embodiment 2 of the present invention; and
FIG. 11 is a perspective view showing the structure of a plate nut of Embodiment 2 of the present invention.

### MODE FOR CARRYING OUT THE INVENTION

Hereinafter, embodiments of the present invention will be described using drawings. The same reference numerals as those shown in the drawings represent identical or corresponding elements.

### Embodiment 1.

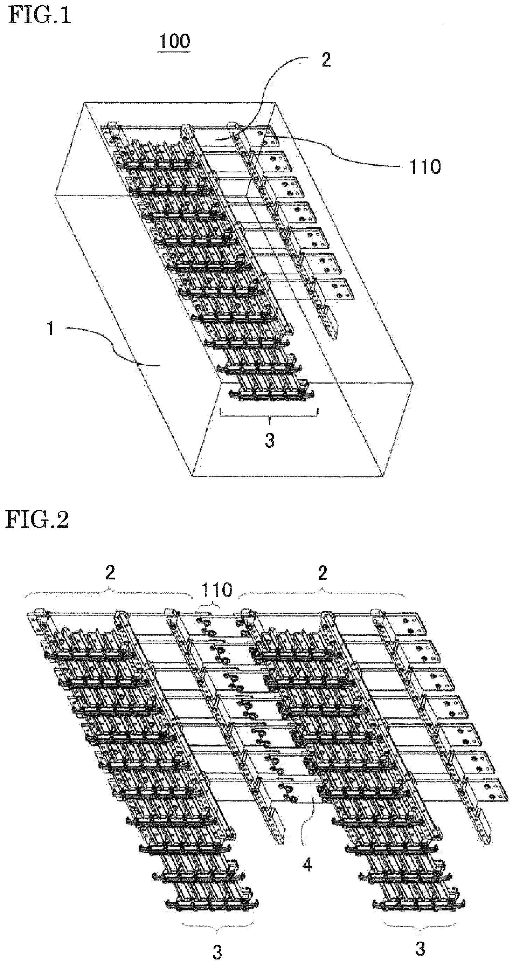

FIG. 1 is a perspective view showing a busbar structure and a busbar connection device of a control center of Embodiment 1 according to the present invention. As shown in FIG. 1, a control center 100 has: a plurality of horizontal busbars 2 each extended in a horizontal direction on the back of a housing 1; a plurality of units (not shown in the drawing) arranged on the front of the housing 1; and vertical busbars 3 each extended in the vertical direction of the housing 1 and each electrically connecting each of the horizontal busbars 2 and the units. Furthermore, the control center 100 has a busbar connection device 110 on the right end of the horizontal busbar 2.

FIG. 2 is a perspective view showing connection of the horizontal busbars 2. As shown in FIG. 2, the horizontal busbar 2 is electrically connected to a horizontal busbar 2 of an adjacent control center (not shown in the drawing). A connection conductor 4, which is a short conductor, is used for the connection and is connected between the ends of the adjacent horizontal busbars 2 in a straddled manner.

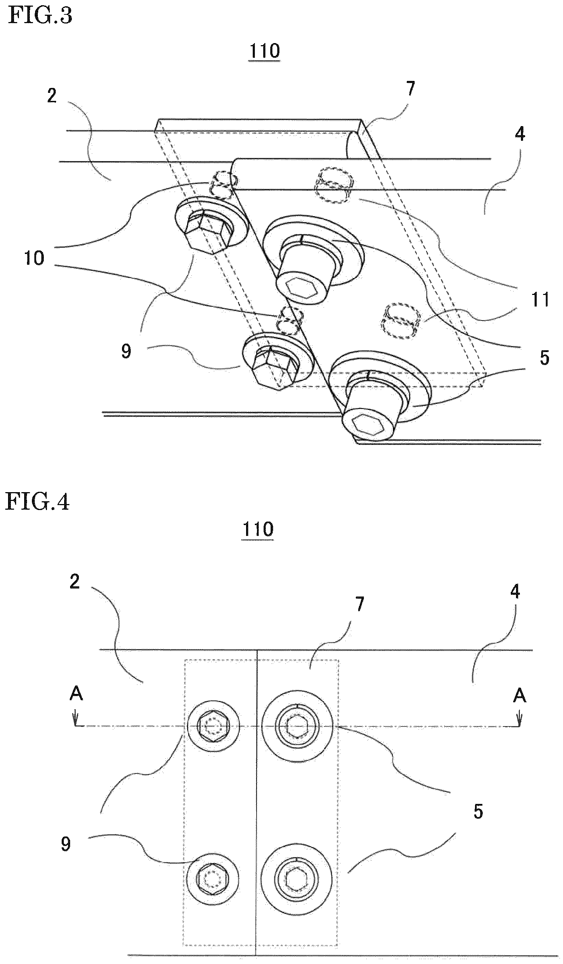

FIG. 3 is a perspective view of the busbar connection device 110; and FIG. 4 is a front view of the busbar connection device 110. The busbar connection device 110 has: a fixing bolt 5 which is for connecting the horizontal busbar 2 and the connection conductor 4; a plate nut 7 having a fixing threaded hole 11 in which tapping/threading is made for fastening the fixing bolt 5; an adjusting bolt 9 which is for connecting the plate nut 7 and the horizontal busbar 2; the horizontal busbar 2 having a through hole 14 through which the fixing bolt 5 passes and an adjusting hole 12 through which the adjusting bolt 9 passes; and the connection conductor 4 having a fixing hole 6 through which the fixing bolt 5 passes.

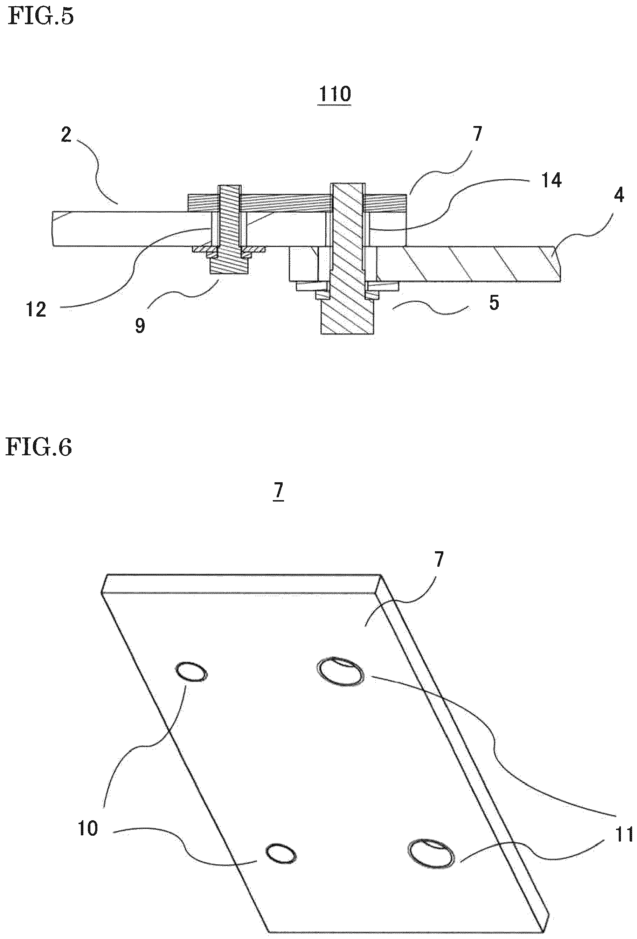

FIG. 5 is a sectional view taken along the line A-A of FIG. 4. The plate nut 7 is connected by the horizontal busbar 2 and the adjusting bolt 9 that passes through the adjusting hole 12. The adjusting bolt 9 is screwed together to the plate nut 7 and is formed in a fitting shape such that the diameter of the adjusting hole 12 is larger than the diameter of the adjusting bolt 9; thus, position adjustment can be performed.

FIG. 6 is a perspective view showing the structure of the plate nut 7. The plate nut 7 has: an adjusting threaded hole 10 which is for fastening the adjusting bolt 9 to the horizontal busbar 2; and the fixing threaded hole 11 in which tapping/threading is made for fastening the fixing bolt 5, the fixing bolt 5 being for connecting the horizontal busbar 2 and the connection conductor 4.

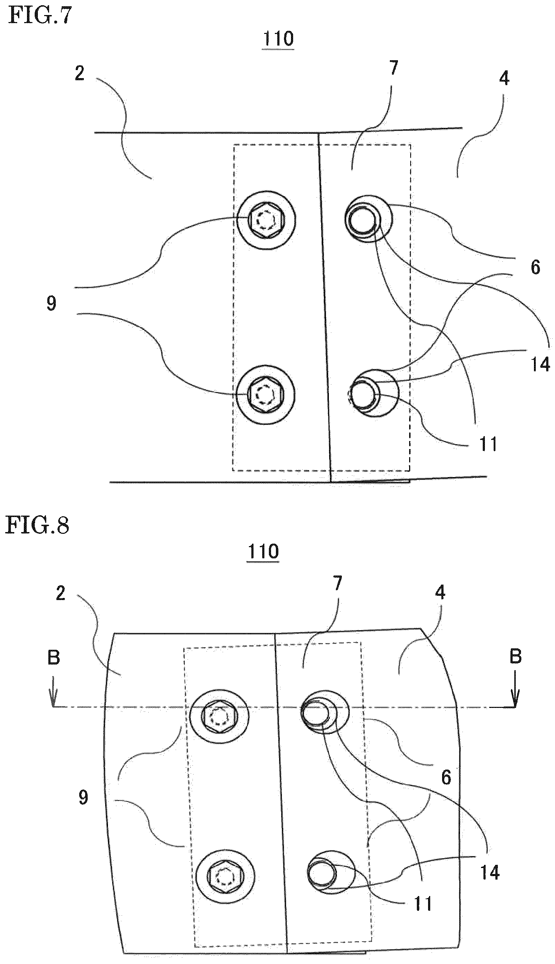

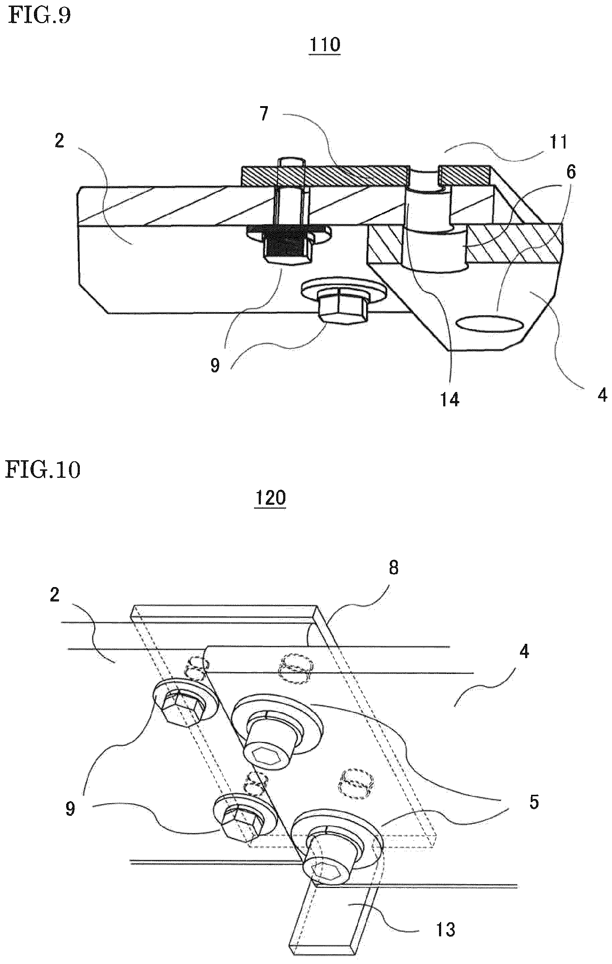

FIG. 7 and FIG. 8 are each a front view of the busbar connection device 110 in the case of connecting the horizontal busbar 2 and the connection conductor 4; and FIG. 9 is a sectional view taken along the line B-B of FIG. 8. Furthermore, in FIG. 7, FIG. 8, and FIG. 9, the plate nut 7 located on the back surface of the horizontal busbar 2 is represented by a dotted line. There will be described operation using FIG. 7, FIG. 8, and FIG. 9, the operation being for adjusting the position of the plate nut 7 when adjustment of connection position is required during connection work of the horizontal busbar 2 and the connection conductor 4.

FIG. 7 shows a state where the horizontal busbar 2 and the plate nut 7 are connected by the adjusting bolt 9. Since the position of the fixing threaded hole 11 provided in the plate nut 7 is deviated from the position of the fixing hole 6 provided in the connection conductor 4, it shows a state where the position of the fixing threaded hole 11 needs to be adjusted.

FIG. 8 shows a state where the position of the plate nut 7 is adjusted with respect to the state of FIG. 7 and the connection conductor 4 can be connected.

As shown in FIG. 4, the plate nut 7 is connected to the horizontal busbar 2 by the adjusting bolt 9 and therefore a position can be changed using the adjusting hole 12 formed in the fitting shape with respect to the horizontal busbar 2 by loosening fixing. The plate nut 7 is screwed together to the horizontal busbar 2 by the adjusting bolt 9 and therefore the plate nut 7 can change the position with respect to the horizontal busbar 2 by loosening the fastening of the adjusting bolt 9. As shown in FIG. 8, the deviation between the fixing threaded hole 11 provided in the plate nut 7 and the fixing hole 6 provided in the connection conductor 4 is solved by adjusting the position and the connection conductor 4 can be connected.

FIG. 9 shows the busbar connection device 110 after adjustment of the position of the plate nut 7 and shows that the operation of changing the position of the plate nut 7 with respect to the horizontal busbar 2 becomes adjustment for connecting the horizontal busbar 2 to the connection conductor 4. Furthermore, it shows that the position adjustment is not limited to one direction and that the horizontal direction position, the vertical direction position, and the tilt of the plate nut 7 can be adjusted.

Consequently, according to Embodiment 1 of the present invention, the position adjustment of the plate nut 7 can be performed by loosening the fixing of the adjusting bolt 9 of the busbar connection device 110, adjustment necessary for connecting the horizontal busbar 2 and the vertical busbar 4 can be performed, and, additionally, an adjustable direction is not limited to one direction. Furthermore, the structure is such that the plate nut 7 is fixed on one side of the horizontal busbar 2 and the plate nut 7 is not influenced by the thickness of the horizontal busbar 2; therefore, the plate nut 7 of the same shape can be used for the conductors of various thicknesses. Since the plate nut 7 is a member in which drilling and tapping/threading are made to a plate member, complicated bending is not required and manufacturing costs can be suppressed. Further, the plate nut 7 is fixed to the horizontal busbar 2 from the time of work starting and therefore the plate nut 7, the fixing bolt 5, and the adjusting bolt 9 are not dropped during work as compared to the case where commonly used nuts are used; and furthermore, work of pressing the plate nut 7 is not required during fastening of the adjusting bolt 9 and therefore there exists no work on the backside of the horizontal busbar 2, which is impossible to visually check. Additionally, it corresponds to work with one hand and therefore a work space can also be reduced.

In this embodiment, the plate nut 7 is provided with two places of the adjusting threaded holes 10. Similarly, the plate nut 7 is provided with two places of the fixing threaded holes 11.

### Embodiment 2.

Hereinafter, different points from Embodiment 1 will be described using drawings regarding a busbar connection device of Embodiment 2 of the present invention. The other configuration is the same as that of the Embodiment 1.

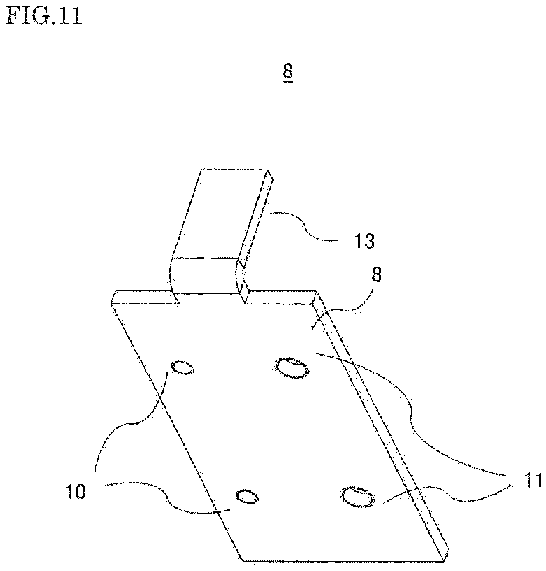

FIG. 10 is a perspective view showing a busbar connection device 120. FIG. 11 is a perspective view showing the structure of a plate nut.

In FIG. 10 and FIG. 11, a plate nut 8 has a bent portion 13 on the lower portion thereof and position adjustment of the plate nut 8 can be easily performed by handling the bent portion 13. This enables the plate nut 8 to be handled easily and workability is improved in work from the front of a housing 1.

Consequently, according to Embodiment 2 of the present invention, in addition to effects of Embodiment 1, position adjustment of the plate nut 8 is facilitated and workability of busbar connection work can be improved by using the plate nut 8 having the bent portion 13 in the busbar connection device 120.

Incidentally, in this embodiment, although the bent portion 13 is provided on the lower portion of the plate nut 8, the position of the bent portion 13 is not limited to the lower portion of the plate nut.

Further, the present invention is applied to bus bar connection of the control center; however, it is to be clearly understood that the present invention can also be applied to switchgear provided with busbars and a bus duct through which busbars pass.

100 Control center, 110, 120 Busbar connection device, 1 Housing, 2 Horizontal busbar, 3 Vertical busbar, 4 Connection conductor, 5 Fixing bolt, 6 Fixing hole, 7, 8 Plate nut, 9 Adjusting bolt, 10 Adjusting threaded hole, 11 Fixing threaded hole, 12 Adjusting hole, 13 Bent portion, 14 Through hole

## Claims

1. A control center (100) comprising a busbar connection device (110, 120), the control center (100) having a horizontal busbar (2) which is extended in a horizontal direction and through which a current flows, the horizontal busbar (2) having two adjusting holes (12) and two through holes (14), the busbar connection device (110, 120) comprising:
a connection conductor (4) that is configured to electrically connect the horizontal busbar (2) of the control center (100) to a horizontal busbar (2) of an adjacent control center, the connection conductor (4) being connectable between end parts of the adjacent horizontal busbars (2), the connection conductor (4) having two fixing holes (6);
two fixing bolts (5) connecting the horizontal busbar (2) and the connection conductor (4); and
a plate nut (7, 8) having two fixing threaded holes (11) in which tapping/threading is made for fastening the fixing bolts (5),
wherein the fixing bolts (5) pass through the fixing holes (6) and the through holes (14),
wherein the busbar connection device (110, 120) further comprises two adjusting bolts (9) connecting the plate nut (7, 8) and the horizontal busbar (2),
wherein the plate nut (7, 8) includes two adjusting threaded holes (10) in which tapping/threading is made for fastening the adjusting bolts (9),
wherein the adjusting bolts (9) pass through the adjusting holes (12), the adjusting holes (12) being formed in a fitting shape such that the diameter of the adjusting holes (12) is larger than the diameter of the adjusting bolts (9) in a way that the position of the plate nut (7, 8) can be adjusted,
**characterized in that** the adjusting bolts (9) do not pass through the connection conductor (4).

2. The control center (100) according to claim 1, wherein the plate nut has a bent portion (13).

## Patentansprüche

1. Steuerzentrale (100), die eine Sammelschienenverbindungsvorrichtung (110, 120) aufweist, wobei die Steuerzentrale (100) eine horizontale Sammelschiene (2) aufweist, die sich in einer horizontalen Richtung erstreckt und durch die ein Strom fließt, wobei die horizontale Sammelschiene (2) zwei Einstelllöcher (12) und zwei Durchgangslöcher (14) aufweist, wobei die Sammelschienenverbindungsvorrichtung (110, 120) aufweist:
einen Verbindungsleiter (4), der eingerichtet ist, die horizontale Sammelschiene (2) der Steuerzentrale (100) elektrisch mit einer horizontalen Sammelschiene (2) einer benachbarten Steuerzentrale zu verbinden, wobei der Verbindungsleiter (4) zwischen Endteilen der benachbarten horizontalen Sammelschienen (2) verbindbar ist, wobei der Verbindungsleiter (4) zwei Fixierlöcher (6) aufweist;
zwei Fixierbolzen (5), die die horizontale Sammelschiene (2) und den Verbindungsleiter (4) verbinden; und
eine Plattenmutter (7, 8) mit zwei Fixiergewindelöchern (11), in denen ein Gewinde zum Befestigen der Fixierbolzen (5) vorgesehen ist,
wobei die Fixierbolzen (5) durch die Fixierlöcher (6) und die Durchgangslöcher (14) verlaufen,
wobei die Sammelschienenverbindungsvorrichtung (110, 120) ferner zwei Einstellbolzen (9) aufweist, die die Plattenmutter (7, 8) und die horizontale Sammelschiene (2) verbinden,
wobei die Plattenmutter (7, 8) zwei Einstellgewindelöcher (10) umfasst, in denen ein Gewinde zum Befestigen der Einstellbolzen (9) vorgesehen ist,
wobei die Einstellbolzen (9) durch die Einstelllöcher (12) verlaufen, wobei die Einstelllöcher (12) in einer Passform ausgebildet sind, so dass der Durchmesser der Einstelllöcher (12) auf eine Weise größer als der Durchmesser der Einstellbolzen (9) ist, dass die Position der Plattenmutter (7, 8) eingestellt werden kann,
**dadurch gekennzeichnet, dass** die Einstellbolzen (9) nicht durch den Verbindungsleiter (4) verlaufen.

2. Steuerzentrale (100) nach Anspruch 1, wobei die Plattenmutter einen gebogenen Abschnitt (13) aufweist.

## Revendications

1. Centre de commande (100) comprenant un dispositif de connexion de barre omnibus (110, 120), le centre de commande (100) ayant une barre omnibus horizontale (2) qui s'étend dans une direction horizontale et à travers laquelle un courant circule, la barre omnibus horizontale (2) ayant deux trous d'ajustement (12) et deux trous traversants (14), le dispositif de connexion de barre omnibus (110, 120) comprenant :
un conducteur de connexion (4) qui est conçu pour connecter électriquement la barre omnibus horizontale (2) du centre de commande (100) à une barre omnibus horizontale (2) d'un centre de commande adjacent, le conducteur de connexion (4) pouvant être connecté entre des parties d'extrémité des barres omnibus horizontales (2) adjacentes, le conducteur de connexion (4) ayant deux trous de fixation (6) ;
deux boulons de fixation (5) reliant la barre omnibus horizontale (2) et le conducteur de connexion (4) ; et
une plaque formant écrou (7, 8) ayant deux trous filetés de fixation (11) dans lesquels un taraudage/filetage est réalisé pour fixer les boulons de fixation (5),
les boulons de fixation (5) traversant les trous de fixation (6) et les trous traversants (14),
le dispositif de connexion de barre omnibus (110, 120) comprenant en outre deux boulons d'ajustement (9) reliant la plaque formant écrou (7, 8) et la barre omnibus horizontale (2),
la plaque formant écrou (7, 8) comportant deux trous filetés d'ajustement (10) dans lesquels un taraudage/filetage est réalisé pour fixer les boulons d'ajustement (9),
les boulons d'ajustement (9) traversant les trous d'ajustement (12), les trous d'ajustement (12) étant formés selon une forme adaptée de sorte que le diamètre des trous d'ajustement (12) est supérieur au diamètre des boulons d'ajustement (9) de telle sorte que la position de la plaque formant écrou (7, 8) peut être ajustée,
**caractérisé en ce que** les boulons d'ajustement (9) ne traversent pas le conducteur de connexion (4).

2. Centre de commande (100) selon la revendication 1, la plaque formant écrou ayant une partie courbée (13).
